# EUROPEAN PATENT SPECIFICATION

(11) **EP 2 149 308 B1**
(45) Date of publication and mention of the grant of the patent: **16.11.2011**
(21) Application number: 09166897.0
(22) Date of filing: 30.07.2009
(51) Int. Cl.: A23D 7/005, A23L 1/24, C11B 5/00

(54) **Oxidation stability using natural antioxidants**
Oxidationsstabilität mithilfe natürlicher Antioxidantien
Stabilité d'oxydation à l'aide d'antioxydants naturels

(30) Priority: 30.07.2008 US 84792 P; 27.07.2009 US 509787
(43) Date of publication of application: 03.02.2010
(73) Proprietor: Kraft Foods Global Brands LLC, Northfield, IL 60093 (US)
(72) Inventor: West, Leslie, Winnetka IL 60093 (US); Dinwoodie Robert, Glenview IL 60025 (US); Tsui, Ida, Libertyville IL 60048 (US)
(74) Representative: Murray, Adrian D'Coligny

(56) References cited:
- EP-A- 1 949 798
- EP-A- 2 078 461
- WO-A-2008/059782
- JP-A- 2007 153 807
- US-A1- 2002 122 857
- US-A1- 2005 065 184
- US-A1- 2005 089 620
- VELISEK, J, KUBEC, R., CEJPEK, K: "Biosynthesis of Food Constituents: Amino Acids: 4. Non-protein Amino Acids ? a Review" CZECH J. FOOD SCI, vol. 24, no. 3, 2006, pages 93-109, XP002547445
- VON WIREN N.; KLAIR, S.; BANSAL, S.; BRIAT, J-F.; KHODR, H,; SHIOIRI T.; LEIGH R.A; HIDER R.C: "Nicotianamine chelates both FeIII and FeII. Implications for metal transport in plants Rober" PLANT PHYSIOLOGY, vol. 119, 1999, pages 1107-1114, XP002547212
- KATAOKA; S: "Functional effects of Japanese style fermented soy sauce (shoyu) and its components" JOURNAL OF BIOSCIENCE AND BIOENGINEERING, vol. 100, no. 3, 2005, pages 227-234, XP005665595

## Description

### CROSS-REFERENCE TO RELATED APPLICATION

This application claims benefit of United States Application Numbers 61/084,792, filed July 30, 2008, and 12/509,787, filed July 27, 2009, the contents of which are hereby incorporated herein by reference in their entirety.

### FIELD

The field relates to natural antioxidants, and in particular natural antioxidants in comestibles.

### BACKGROUND

Oxidation is a process that occurs in food products, causing foods to spoil and become unpleasing in taste and appearance. Oxidation reactions may occur when chemicals in food are exposed to oxygen in the air and free radicals are formed. It has been shown that free radicals may naturally occur, at least in part, due to the presence of iron- or copper-ion catalysts. Under normal conditions, animal and plant tissues naturally contain antioxidants which prevent oxidative damage. However, in foods many of these naturally occurring antioxidants break down and no longer impart their protective properties to the food. Oxidation of fat and oil in food can lead to rancidity and, in fruit, can cause discoloration. This oxidation ultimately leads to spoilage of the food and a corresponding loss of nutritional value and favorable organoleptic properties. As a result, removing free metal ions, such as iron and copper ions, present in food products can result in oxidative stability to foods that are more resistant to spoilage and have preserved flavor quality and improved color retention.

Traditionally, ethylenediaminetetraacetic acid or EDTA has been used in food and beverage products to prevent oxidation and spoilage due to its capacity to chelate metals. This material generally enjoys widespread use in industry, medicine, and laboratory science due to its restively high capability to chelate metal ions. In the food and beverage industry, EDTA is often used to protect products from oxidation and spoilage and to improve flavor quality and color retention. EDTA, however, is a synthetic or artificial ingredient.

Recently, there have been increased desires for the removal of artificial ingredients in food and beverage products and their replacement with natural alternatives. For example, artificial preservatives, colors and flavors have been successfully replaced, in some instances, with natural counterparts. Owing to its effectiveness, reasonable cost, and lack of viable alternatives, however, EDTA has so far been one of the more difficult artificial ingredients to replace. Attempts so far to replace or remove EDTA from foods and beverages have thus far yielded somewhat disappointing results. For example, naturally produced siderophores (from yeast and fungi) are effective metal chelators, but unacceptably add color to foods and beverages.

JP2007-153807 discloses an oral iron absorption-promoting composition containing nicotianamine as an active ingredient, and a food, beverage or medicine containing a chelated nicotianamine-iron compound or a mixture of nicotianamine with an iron compound as an active ingredient and each having iron absorption-promoting action. JP2007153807 also provides a method for producing such compositions an using them for improving the symptoms of anaemia, as oral iron absorption promoters and as oral iron agents for administration following blood donation, surgical operations and birth.

US2002/122857 provides a process for producing a nicotianamine product of desired purity. The process involves either the step of precipitation fractionation of an aqueous extract of soybeans by the addition of an organic solvent such as ethanol, or the step of molecular weight fractionation of the extract by ultrafiltration or size exclusion chromatography, followed by activated carbon filtration, cation- or anion-exchange resin treatment or other adsorbent (e.g., polyamide or octadecylsilica) treatment to provide the nicotianamine product. The product is added to food and drink to provide health foods

US2005/065184 discloses a method for ascertaining whether a subject has oxidative stress; evaluating the level of oxidative stress in a subject; reducing the risk of an adverse event, especially an adverse cardiovascular event, resulting from oxidative stress; treating oxidative stress; and evaluating the efficacy of treatment with at least one pharmaceutical composition for reducing oxidative stress.

EP1949798 discloses a liquid seasoning containing the following (A), (B), and (C): (A) 0.4 to 8% by mass of sodium (B) 0.01 to 4% by mass of flavonoid (C) 1 to 10% by mass of ethanol.

EP2078461 provides a highly unsaturated fatty acid containing food or beverage produced by blending a highly unsaturated fatty acid containing oil-and fat, a ground soybean meal and water together and homogenizing them as raw materials which have an acidic property.

WO2008/059782 discloses a process for producing a mugineic acid compound. US2005/089620 discloses an edible emulsion with insoluble fiber. The edible emulsion is suitable for use as a base for making reduced oil food products. The reduced oil food products made with the edible emulsion having insoluble fiber have consumer acceptable viscosities and texture and sensorial properties consistent with full fat food products.

### SUMMARY

According to a first aspect of the present invention, there is provided an oxidatively stable mayonnaise comprising a mayonnaise base; 60 to 400 ppm of nicotianamine blended into the mayonnaise base, the nicotianamine effective to provide oxidative stability; and wherein the mayonnaise base is free of EDTA, and wherein the nicotianamine maintains the amount of heptadienal generated from the oxidatively stable mayonnaise to 1500 ppb or less after 7 weeks of storage at 43°C. In one embodiment, the effective amount of nicotianamine is 60 to 200 ppm. In another embodiment, the effective amount of nicotianamine is effective to reduce formation of free radicals in the comestible to less than about 3, and more preferably less than 2 microM Tempol equivalent after 130 hours of incubation at 37°C.

According to a second aspect of the present invention, there is provided a method of preparing an oxidatively stable nicotianamine containing mayonnaise comprising providing a mayonnaise; and combining 60 to 400 ppm of nicotianamine effective to reduce oxidation of the product, wherein the mayonnaise is free of EDTA, and wherein the nicotianamine maintains the amount of heptadienal generated from the mayonnaise to about 1500 ppb or less after 7 weeks of storage at 43°C. The nicotianamine may be added to the product during the formulation of the product. Alternatively, the nicotianamine may be added to the product after its formulation.

### BRIEF DESCRIPTION OF THE DRAWINGS

FIG. 1 is a graph demonstrating the efficacy of nicotianamine compared to EDTA; and

FIG. 2 is another graph demonstrating the efficacy of nicotianamine compared to EDTA.

### DETAILED DESCRIFTION

An oxidatively stable mayonnaise including naturally occurring antioxidants is provided In particular, mayonnaise including effective amounts of nicotianamine (NA) to provide oxidative stability similar to EDTA is disclosed. By one approach, the NA is natural or is not synthetically or artificially formed. By another approach, the NA is obtained from a plant or other natural source. It has been discovered that nicotianamine may be able to provide the same preservative and protective effects provided by EDTA. This substitution of nicotianamine would allow the replacement of synthetic EDTA with the naturally occurring compound nicotianamine. In one aspect, 60 to 400 ppm, and in another aspect, 60 to 200 ppm NA is sufficient to impart oxidative stability similar to EDTA. In one particular example, 60 to 400 ppm NA is provided in mayonnaise, to form an oxidatively stable product that is also substantially free of EDTA. In one approach, the mayonnaise includes lipids, water, emulsifiers such as eggs, edible acids and flavors in combination with effective amounts of NA.

Further, for the purpose of his disclosure, the term " free of EDTA" is intended to indicate a product having less than 1 weight % EDTA, preferably a product having less than 0.1 weight % EDTA, and more preferably a product containing no EDTA.
In addition, the effective amounts of NA also do not impart any objectionable organoleptic changes to the foods, such as changes in color, taste, odor, or texture, such that the comestible with the NA has organoleptic properties similar to the comestible with EDTA.

Nicotianamine (NA) is a non-protein amino acid that is widely present in nature, especially in plants. NA generally refers to N-(N-(3-amino-3-carboxypropyL)-3-amino-3-carboxypropyl) azetidine-2-carboxylic acid and is generally found in plants such as tobacco, rice, Chinese matrimony vines, and beeches and can be obtained from the leaves of these plants. It is also known that nicotianamine can be found in kidney beans and soybeans and that an extract of the beans with water or hot water is treated with a synthetic resin to obtain purified nicotianamine.

The following provides examples of how nicotianamine may be extracted and obtained from various sources. It will be appreciated that other methods and sources of nicotianamine may also be used as needed. For example, nicotianamine has been isolated and purified by creating an aqueous extract of soybeans, subjecting the extract to ultrafiltration or size exclusion chromatography to obtain a fraction having a molecular weight of 1,000 or less, adding an organic solvent, and collecting the resulting precipitate. Additionally, the aqueous extract or fraction may be subjected to ion-exchange resin treatment and/or activated carbon filtration to further purify the nicotianamine containing product. In other examples, nicotianamine may also be obtained by genetically engineering yeast cells to overproduce the nicotianamine precursor S-adenosylmethionine (SAM). The SAM is then trimerized by nicotianamine synthase to create nicotianamine at significantly increased levels (See, e.g., W. Yasuaki, Metabolic engineering of Saccharomyces cervisiae producing nicotianamine: potential for industrial biosynthesis of a novel hypertensive substrate, Bioscience, biotechnology, and biochemistry (Japan), June 2006).

By one approach, the nicohanamine may be added to mayonnaise in a number of methods. For example, the nicotiaiamine may be added with other ingredients during the formation of the mayonnaise ur, by other approaches, may also be added after the final formation of the product. Specifically, nicotianamine should be added to the mayonnaise in an amount effective to prevent levels of oxidation of the mayonnaise similar to antioxidation effects obtained when EDTA was used instead. 60 to 400 ppm nicotianamine is added to mayonnaise to achieve such similar anti-oxidative effects when the mayonnaise is also substantially free of EDTA.

In one embodiment, nicotianamine is added to mayonnaise to prevent oxidation of the mayonnaise during storage. The nicotianamine may be added in place of EDTA or to supplement EDTA. In a preferred embodiment, the mayonnaise is substantially free of EDTA. In a preferred embodiment, the mayonnaise contains no EDTA. By another approach, the
mayonnaise preferably has a pH of between 3.0 and 5.0 and preferably has a titrateable acidity of between 0.2 and 0.5.

Advantages and embodiments of this invention are further illustrated by the following example, but the particular materials and amounts thereof recited in these examples, as well as other conditions and details, should not be construed to unduly limit the invention. All parts and percentages are by weight unless otherwise directed.

### EXAMPLES

Example 1

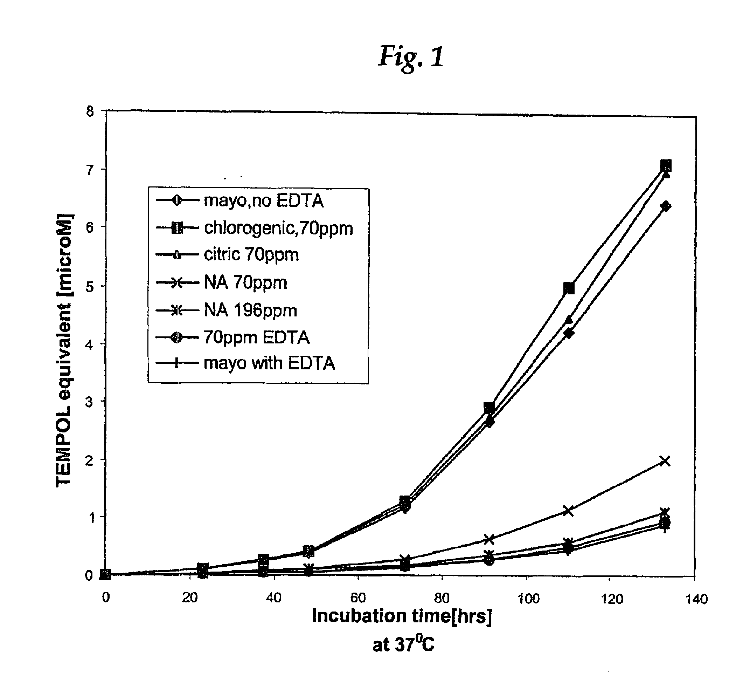

Samples to be tested were created by first forming a mayonnaise base, which contained no chelating agent. This mayonnaise base was used as a control and is labeled "Mayo, no EDTA" in FIG. 1, the mayonnaise base had a pH of about 3.7 and a titrateable acidity of about 0.31. Citric acid, chlorogenic acid, nicotianamine (NA), and EDTA were added to the mayonnaise base by stirring in the substances in the amounts indicated in FIG. 1. The sample labeled "mayo with EDTA" is a commercially available mayonnaise sample (Kraft REAL Mayonnaise, Kraft Foods, Northfield, Illinois) generally having about 70 ppm EDTA. The sample labeled "70ppm EDTA" was a comparison sample prepared by blending 70 ppm of EDTA into the mayonnaise base similar to the other ingredients.

The samples were analyzed using quantitative electron paramagnetic resonance (EPR) to detect the formation of free radicals. The EPR techniques is an adaptation of Thomsen, "Quantification of Radical Formation in Oil-in-Water Food Emulsions by Electron Spin Resonance Spectroscopy" in Journal of Food Lipids, Volume 6, Issue 2, pages 149-158, June 1999, which is incorporated herein in its entirety. EPR is used to detect the presence of stable free radicals expressed as 4-hydroxy-2,2,6,6-tetramethylpiperidinyloxy (TEMPOL) equivalent measured at the micromolar (microM) level. Higher amounts of TEMPOL equivalent present in a sample indicates a lower ability to resist or prevent the formation of free radicals. Lower levels of TEMPOL equivalent indicate that the substance has a protective effect and aids in the prevention of the formation of free radicals. By preventing free radical formation and thereby lowering the amount of free radicals present in the product, oxidation of the product is avoided as well.

The resulting mayonnaise samples were incubated at about 37°C and the presence of TEMPOL equivalent was measured at various time points. As shown in FIG. 1, while the samples containing no EDTA, 70 ppm chlorogenic acid, and 70 ppm citric acid displayed increased levels of free radical formation, the samples containing 70 ppm and 196 ppm of nicotianamine had levels of free radicals comparable to both mayonnaise samples containing EDTA. Therefore, the presence of nicotianamine imparted a protective effect on the mayonnaise sample equivalent to EDTA.

Example 2

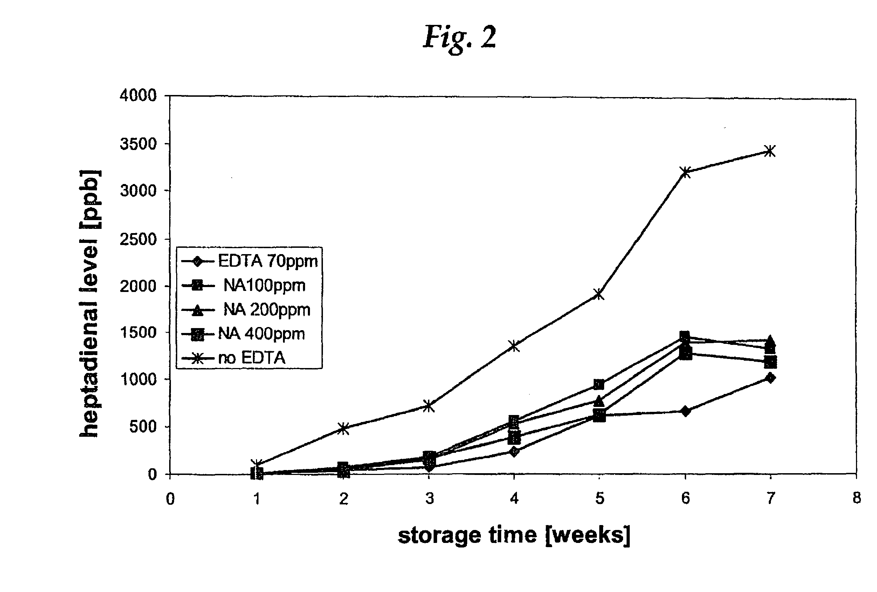

Similar to Example 1, samples to be tested were created by first forming a mayonnaise base. This mayonnaise base was used as a control and is labeled "no EDTA" in FIG. 2. About 100, 200, and 400 ppm of nicotianaminc (NA) and about 70 ppm of EDTA were added to the mayonnaise base by stirring in the substances in the mayonnaise. The sample labeled "EDTA 70ppm" was a comparison sample prepared by blending 70 ppm of EDTA into the mayonnaise base similar to the other chelating agents.

The various mayonnaise samples were subjected to an accelerated storage environment by incubating each of the samples for up to about 7 weeks at about 43°C. At weekly intervals, the headspace of the containers holding the samples was tested for the presence of heptadienal. Heptadienal is a compound that is generated from the oxidation of lipids and is used for this purpose to evaluate the rate and amount oxidation taking place during accelerated storage. Heptadienal levels were analyzed by first removing a gas sample from the headspace of each container. These gas samples were then subjected to gas chromatography to detect the presence and amount of heptadienal. Higher levels of heptadienal present indicate an elevated amount of oxidation, while lower levels of heptadienal present indicate a relatively lower amount of oxidation.

As shown in FIG. 2, the mayonnaise sample containing no EDTA had elevated amount of heptadienal, and thus oxidation, over the testing period when compared to the other samples. However, the levels of heptadienal in the mayonnaise samples containing about 100, 200 and 400 ppm of nicotianamine were comparable to the EDTA containing sample. Therefore, the presence of such amounts of nicotianamine was effective to impart a protective effect on the mayonnaise sample equivalent to EDTA.

It will be understood that various changes in the details, materials, and arrangements of formulations and ingredients, which have been herein described and illustrated in order to explain the nature of the products and methods herein may be made by those skilled in the art within the principle and scope of the disclosure as expressed in the appended claims.

## Claims

1. An oxidatively stable mayonnaise comprising:
a mayonnaise base;
60 to 400 ppm of nicotianamine blended into the mayonnaise base, the nicotianamine effective to provide oxidative stability; and
wherein the mayonnaise base is free of EDTA, and wherein the nicotianamine maintains the amount of heptadienal generated from the oxidatively stable mayonnaise to 1500 ppb or less after 7 weeks of storage at 43°C.

2. The oxidatively stable mayonnaise of Claim 1, wherein the effective amount of nicotianamine reduces formation of free radicals to less than 2 microM Tempol equivalent after 130 hours of incubation at 37°C.

3. A method of preparing an oxidatively stable nicotianamine containing mayonnaise comprising:
providing a mayonnaise; and
combining 60 to 400 ppm of nicotianamine effective to reduce oxidation of the product, wherein the mayonnaise is free of EDTA, and wherein the nicotianamine maintains the amount of heptadienal generated from the mayonnaise to 1500 ppb or less after 7 weeks of storage at 43°C.

4. The method of Claim 3, wherein the nicotianamine is added during formation of the mayonnaise.

5. The method of Claim 3, wherein the nicotianamine is added after formation of the mayonnaise.

6. The oxidatively stable mayonnaise of Claim 1, wherein the mayonnaise has a pH of 3 to 5 and a titrateable acidity of 0.2 to 0.5; and 60 to 400 ppm of nicotianamine blended into the mayonnaise.

7. The oxidatively stable mayonnaise of Claim 6, wherein the mayonnaise has less than 2 micromolar Tempol equivalent after 130 hours of incubation at 37°C.

## Patentansprüche

1. Oxidativ stabile Mayonnaise, die Folgendes umfasst:
einen Mayonnaisengrundstoff;
60 bis 400 ppm Nicotianamin, das in den Mayonnaisengrundstoff vermischt ist, wobei das Nicotianamin wirksam ist, um oxidative Stabilität bereitzustellen; und
worin der Mayonnaisengrundstoff keine EDTA enthält und worin das Nicotianamin die Menge an Heptadienal, das aus der oxidativ stabilen Mayonnaise erzeugt wird, nach 7 Wochen Lagerung bei 43°C bei bis 1500 ppb oder weniger hält.

2. Oxidativ stabile Mayonnaise nach Anspruch 1, worin die wirksame Menge an Nicotianamin die Bildung von freien Radikalen nach 130 Stunden Inkubation bei 37°C auf weniger als 2 MikroM Tempol-Äquivalent verringert.

3. Verfahren zur Herstellung einer oxidativ stabilen Nicotianamin-enthaltenden Mayonnaise, das Folgendes umfasst:
Bereitstellen einer Mayonnaise; und
Vereinigen von 60 bis 400 ppm Nicotianamin, das zur Verringerung der Oxidation des Produkts wirksam ist, worin die Mayonnaise keine EDTA enthält und worin das Nicotianamin die Menge an Heptadienal, das aus der Mayonnaise erzeugt wird, nach 7 Wochen Lagerung bei 43°C bei bis 1500 ppb oder weniger hält.

4. Verfahren nach Anspruch 3, worin das Nicotianamin während der Bildung der Mayonnaise zugegeben wird.

5. Verfahren nach Anspruch 3, worin das Nicotianamin nach der Bildung der Mayonnaise zugegeben wird.

6. Oxidativ stabile Mayonnaise nach Anspruch 1, worin
die Mayonnaise einen pH von 3 bis 5 und eine titrierbare Acidität von 0,2 bis 0,5 aufweist; und
60 bis 400 ppm Nicotianamin in die Mayonnaise vermischt sind.

7. Oxidativ stabile Mayonnaise nach Anspruch 6, worin die Mayonnaise nach 130 Stunden Inkubation bei 37°C weniger als 2 Mikromol Tempol-Äquivalent aufweist.

## Revendications

1. Mayonnaise stable sur le plan oxydatif, comprenant :
une base de mayonnaise ;
de 60 à 400 ppm de nicotianamine incorporée dans la base de mayonnaise, la nicotianamine étant efficace pour fournir une stabilité oxydative ; et
où la base de mayonnaise est dépourvue d'EDTA, et où la nicotianamine maintient la quantité d'heptadiénal généré à partir de la mayonnaise stable sur le plan oxydatif à 1500 ppb ou moins après 7 semaines de stockage à 43°C.

2. Mayonnaise stable sur le plan oxydatif selon la revendication 1, dans laquelle la quantité efficace de nicotianamine réduit la formation de radicaux libres jusqu'à moins de 2 micromolaires d'équivalent Tempol après 130 heures d'incubation à 37°C.

3. Méthode de préparation d'une mayonnaise contenant de la nicotianamine et stable sur le plan oxydatif, comprenant
la fourniture de mayonnaise ; et
l'incorporation de 60 à 400 ppm de nicotianamine efficace pour réduire l'oxydation du produit, où la mayonnaise est dépourvue d'EDTA, et où la nicotianamine maintient la quantité d'heptadiénal généré à partir de la mayonnaise à 1500 ppb ou moins après 7 semaines de stockage à 43°C.

4. Méthode selon la revendication 3, dans laquelle la nicotianamine est ajoutée pendant la formation de la mayonnaise.

5. Méthode selon la revendication 3, dans laquelle la nicotianamine est ajoutée après la formation de la mayonnaise.

6. Mayonnaise stable sur le plan oxydatif selon la revendication 1, dans laquelle
la mayonnaise a un pH allant de 3 à 5 et une acidité titrable allant de 0,2 à 0,5 ; et
de 60 à 400 ppm de nicotianamine sont incorporés dans la mayonnaise.

7. Mayonnaise stable sur le plan oxydatif selon la revendication 6, dans laquelle la mayonnaise possède moins de 2 micromolaires d'équivalent Tempol après 130 heures d'incubation à 37°C.
